# EUROPEAN PATENT SPECIFICATION

(11) **EP 1 093 238 B1**
(45) Date of publication and mention of the grant of the patent: **28.01.2009**
(21) Application number: 00308977.8
(22) Date of filing: 12.10.2000
(51) Int. Cl.: H04B 1/707, H04B 7/26

(54) **Synchronisation signal transmission method and system for CDMA mobile communication**
Synchronisationssignal-Übertragungsverfahren und System für CDMA-Mobilkommunikation
Procédé de transmission de signal de synchronisation et système pour communication mobile à AMRC

(30) Priority: 14.10.1999 JP 29300599
(43) Date of publication of application: 18.04.2001
(60) Divisional application: 04077778.1
(73) Proprietor: NTT DoCoMo, Inc., Tokyo 100-6150 (JP)
(72) Inventor: Iwamura, Mikio, Zushi-shi, Kanagawa 249-008 (JP); Ishikawa, Yoshihiro, Yokosuka-shi, Kanagawa 239-0841 (JP)
(74) Representative: Beresford, Keith Denis Lewis

(56) References cited:
- EP-A- 0 794 682
- EP-A- 0 795 971
- WO-A-99/65167
- HIGUCHI K ET AL: "FAST CELL SEARCH ALGORITHM IN INTER-CELL ASYNCHRONOUS DS-CDMA MOBILE RADIO" IEICE TRANSACTIONS ON COMMUNICATIONS, INSTITUTE OF ELECTRONICS INFORMATION AND COMM. ENG. TOKYO, JP, vol. E81-B, no. 7, July 1998 (1998-07), pages 1527-1534, XP000789826 ISSN: 0916-8516
- HANADA Y ET AL: "FAST CELL SEARCH ALGORITHM IN IDLE MODE FOR INTER-CELL ASYNCHRONOUS W-CDMA MOBILE RADIO" CRYPTOLOGIA, LAGUNA HILLS, CA, US, vol. E83B, no. 8, August 2000 (2000-08), pages 1610-1618, XP000987025 ISSN: 0161-1194

## Description

The present invention relates to a sync signal transmission method in a CDMA (Code Division Multiple Access) mobile communications system, a CDMA mobile communications system and a base station.

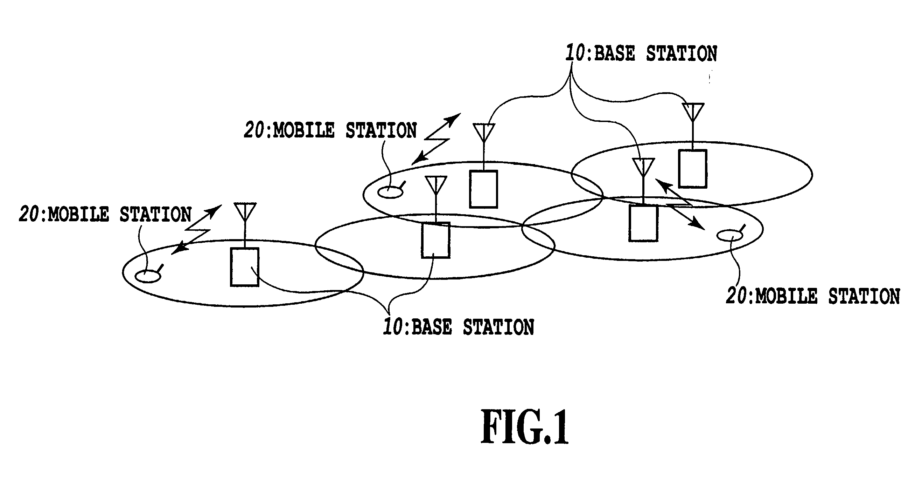

A mobile communication system like a widespread mobile phone system offers its services by dividing the entire service area into rather small radio zones called cells. As shown in Fig. 1, such a system comprises a plurality of base stations 10 to cover the divided radio zones (cells), and mobile stations 20 to communicate with the base stations by establishing radio channels.

The radio signal transmitted from a base station 10 at certain transmission power travels through space with a certain attenuation, and arrives at a receiving site. The attenuation the radio signal undergoes, increases with the distance between the transmitting and the receiving sites. Hence, it is common that a perch channel transmitted from a distant base station 10 is received at a lower received level, and a perch channel transmitted from a near base station 10 is received at a higher received level. In practice, however, the propagation loss is not determined only by the distance, but varies depending on such conditions as the geography and buildings. As a result, the received power of the perch channels from the base stations 10 fluctuate sharply as the mobile stations 20 move. In the condition in which the received levels of the perch channels from the base stations 10 fluctuate always, perches above a required received level alters incessantly such that the received level of the current perch drops suddenly, or the received level of a perch unreceivable increases abruptly above the receivable level. Thus, to receive the signals from the base stations 10 with better quality, it is important for the mobile stations 20 to continuously monitor the perches from the base stations 10, and to select the best base station 10.

Direct Sequence CDMA (DS-CDMA) is a scheme for multiple users to carry out communications using the same radio frequency band. This is established by spreading the spectrum of the data modulated signal of each user with a spreading code. The radio signal of each user is identified by a spreading code assigned to the user.

Each spreading code, used for spreading signals in the DS-CDMA mobile communications system, is a combination of a short period spreading code and a long period spreading code. The short period spreading codes have the same repetition period identical to the length of one information symbol, and are used commonly by all the base stations. In contrast, the long period spreading codes have a repetition period longer than the length of the information symbol, and vary from base station to base station.

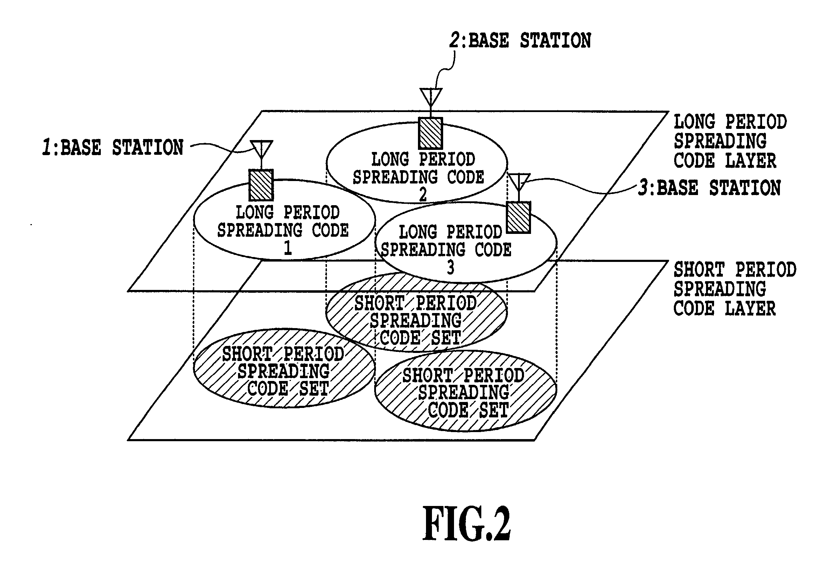

Fig. 2 is a schematic diagram illustrating the spreading codes usage in the DS-CDMA mobile communications system.

In Fig. 2, the upper layer represents the long period spreading codes assigned to the base stations, and the lower layer represents the short period spreading codes commonly used by all base stations. Signals transmitted from each base station are identified by the long period spreading code uniquely assigned to the base station.

Fig. 3 is a schematic diagram illustrating an example of timing relationships among the long period spreading codes a mobile station receives from a plurality of base stations.

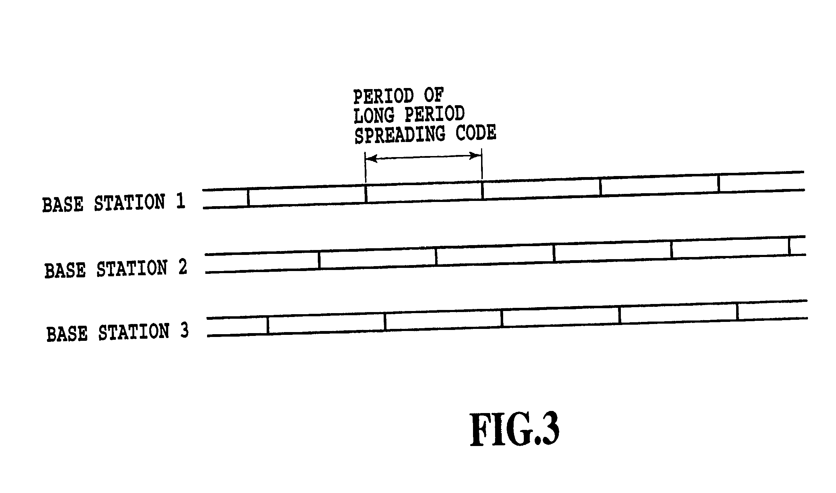

Fig. 3 supposes an asynchronous mobile communications system requiring no synchronization among the base stations. Hence, the timing of the long period spreading codes received by the mobile station takes place at random for the individual base stations.

Therefore, in an asynchronous mobile communication system, mobile stations must search for a perch quickly whose spreading code and phase are unknown. A fast method to acquire a spreading code and its arbitrary phase is described in a document by K. Higuchi, M. Sawahashi and F. Adachi, "Fast Cell Search Algorithm In Inter-Cell Asynchronous DS-CDMA Mobile Radio", IEICE Trans. Commun., Vol. E81-B, No. 7, July 1998. The method provides a "masking symbol" to parts of the perch channel which undergoes double spreading by the short period spreading code and long period spreading code. Here, the "masking symbol" is spread only by the short period spreading code without using the long period spreading code.

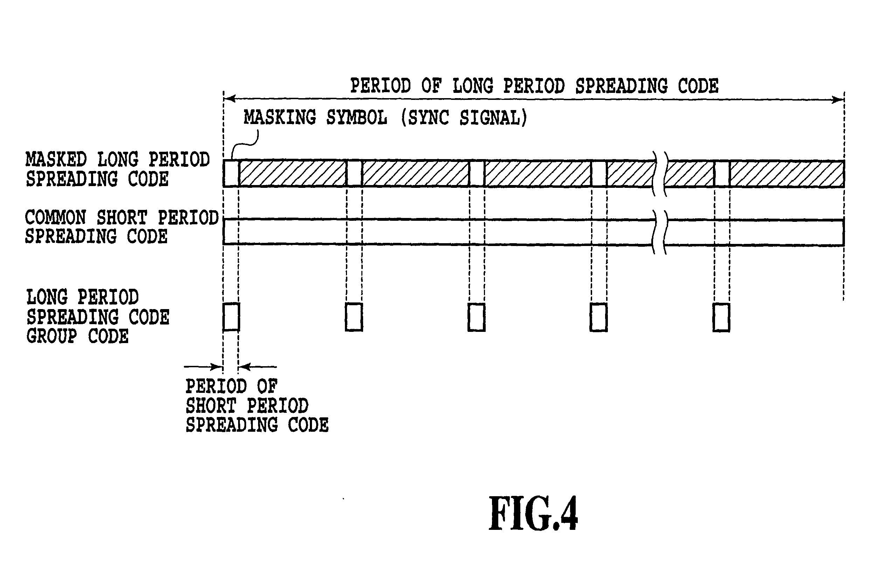

Fig. 4 is a schematic diagram illustrating a structure of a perch channel.

First, the mobile station despreads the received signal using a short period spreading code commonly used by all the base stations. This enables the mobile station to detect a peak at the timing of a masking symbol of the received signal independently of the types of the long period spreading code (first step).

Subsequently, at the timing extracted in the first step, the mobile station detects a long period spreading code group code superimposed on the masking symbol, and identifies the group to which the long period spreading code assigned to the intended base station belongs (second step).

Finally, considering the long period spreading code belonging to the group determined in the second step as the set of candidates, the mobile station identifies the long period spreading code used by the base station (third step).

In a system to which this method is applied, long period spreading codes are divided into groups in advance.

As described above, the mobile communications system comprises a lot of base stations, and each cell consists of sectors covered by directional antennas. Accordingly, the mobile stations must receive signals sent from a great number of sectors. In addition, the signals transmitted from the sectors are reflected off surrounding buildings and divided into many paths before arriving at the mobile stations. Consequently, the signals from the sectors include many delayed waves.

As a result, with respect to the great number of the signals, the mobile stations must identify the long period spreading code and establish timing synchronization in such a condition as the codes or timings are unknown. This presents an important problem of increasing the load on the mobile stations in carrying out the neighboring cell search or base station selection, thereby impairing selection accuracy of the base stations.

EP-A-0795971 discloses a sync signal transmission method in a spread spectrum communications system in which double spreading of information symbols is carried out using a short period spreading code and a long period spreading code, the sync signals being spread by one of the short period spreading codes.

EP-A-0794682 discloses a cell selection scheme in a CDMA mobile communication system in which first type base stations sharing a common reference timing, transmit pilot channels spread using an identical pilot channel spread code at different spread code phases, whilst second type base stations which do not share the common reference timing, transmit pilot channels spread using mutually different pilot channel spread codes at arbitrary spread code phases. The mobile station uses the received pilot channels to select the located cells.

The present invention is implemented to solve the foregoing problem. It is therefore an object of the present invention to provide a technique capable of reducing the load on a mobile station to identify the long period spreading code and to establish the timing synchronization, and capable of increasing the selection accuracy of the base station.

According to a first aspect of the present invention, there is provided a sync signal transmission method in a CDMA mobile communications system including at least a plurality of base stations and a mobile station, said sync signal transmission method characterized by comprising the steps of:
carrying out double spreading of information symbols using a short period spreading code and a long period spreading code, wherein the short period spreading code has a repetition period identical to a period of the information symbols and is assigned in common to all the base stations, and the long period spreading code has a repetition period longer than the information symbols and is differently assigned to each of said base stations;
transmitting the doubly spread information symbols to said mobile station;
receiving timing information at the plurality of base stations; and
intermittently transmitting a sync signal, which is spread only by the short period spreading code, from said plurality of base stations to said mobile station with transmission timings shifted among one another by an amount that is fixed to a predetermined interval of the system and is known to the mobile station in advance.

According to a second aspect of the present invention, there is provided a CDMA mobile communications system including at least a plurality of base stations and a mobile station, said CDMA mobile communications system characterized by comprising:
means for carrying out double spreading of information symbols using a short period spreading code and a long period spreading code, wherein the short period spreading code has a repetition period identical to a period of the information symbols and is assigned in common to all the base stations, and the long period spreading code has a repetition period longer than the information symbols and is differently assigned to each of said base stations;
means for transmitting the doubly spread information symbols to said mobile station;
means for receiving timing information at the plurality of base stations; and
means for intermittently transmitting a sync signal, which is spread only by the short period spreading code, from said plurality of base stations to said mobile station with transmission timings shifted among one another by an amount that is fixed to a predetermined interval of the system and is known to the mobile station in advance.

According to a third aspect of the present invention, there is provided a base station in a CDMA mobile communications system for communicating with a mobile station, said base station characterized by comprising:
means for carrying out double spreading of information symbols using a short period spreading code and a long period spreading code, wherein the short period spreading code has a repetition period identical to a period of the information symbols and is assigned in common to all base stations, and the long period spreading code has a repetition period longer than the information symbols and is differently assigned to each of said base stations;
means for transmitting the doubly spread information symbols to said mobile station;
means for receiving timing information at the plurality of base stations; and
means for intermittently transmitting a sync signal, which is spread only by the short period spreading code, from said base station to said mobile station with transmission timings shifted among one another by an amount that is fixed to a predetermined interval of the system and is known to the mobile station in advance.

According to a fourth aspect of the present invention, there is provided a mobile station in a CDMA mobile communications system for receiving information symbols which are transmitted by a base station and are doubly spread by using a short period spreading code and a long period spreading code, and a sync signal which is transmitted by a base station and is spread only by the short period spreading code, the short period spreading code having a repetition period identical to a period of the information symbols and being assigned in common to all base stations, said mobile station characterized by comprising:
means for searching for a second sync signal focusing on a timing shifted by an amount from a reception timing of a first sync signal which has already been captured by the mobile station, the amount being fixed to a predetermined interval of the system and known to the mobile station in advance; and
means for capturing the second sync signal.

The above and other objects, features and advantages of the present invention will become more apparent from the following description of embodiments thereof taken in conjunction with the accompanying drawings.
Fig. 1 is a diagram illustrating a configuration of a CDMA mobile communications system;
Fig. 2 is a schematic diagram illustrating a method of using spreading codes in a DS-CDMA mobile communications system;
Fig. 3 is a schematic diagram illustrating timings of long period spreading codes in signals sent from base stations to be received by a mobile station;
Fig. 4 is a schematic diagram illustrating a structure of a perch channel;

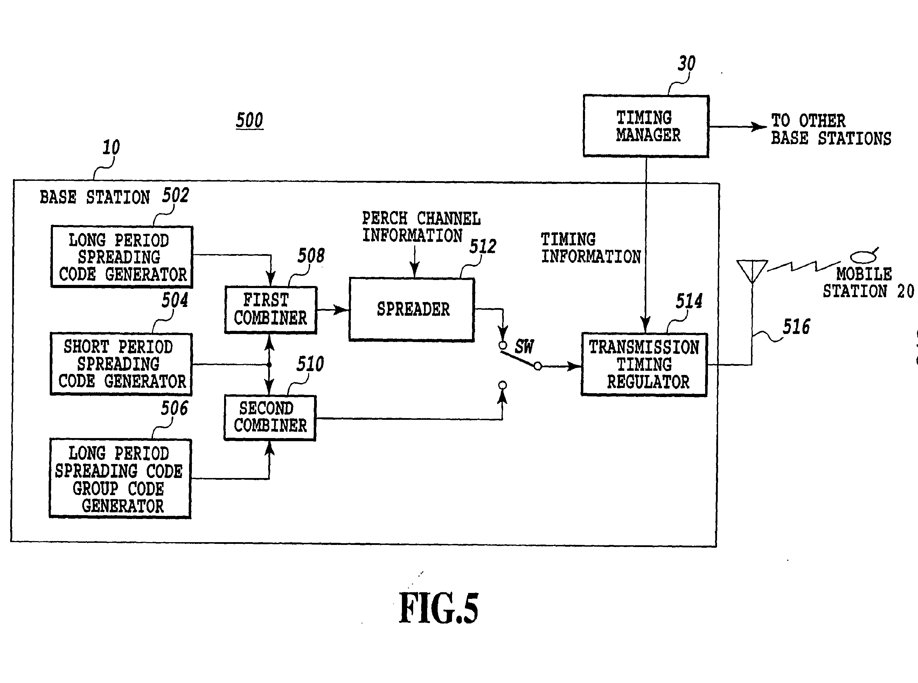

Fig. 5 is a block diagram showing a configuration of an embodiment of a mobile communications system in accordance with the present invention;

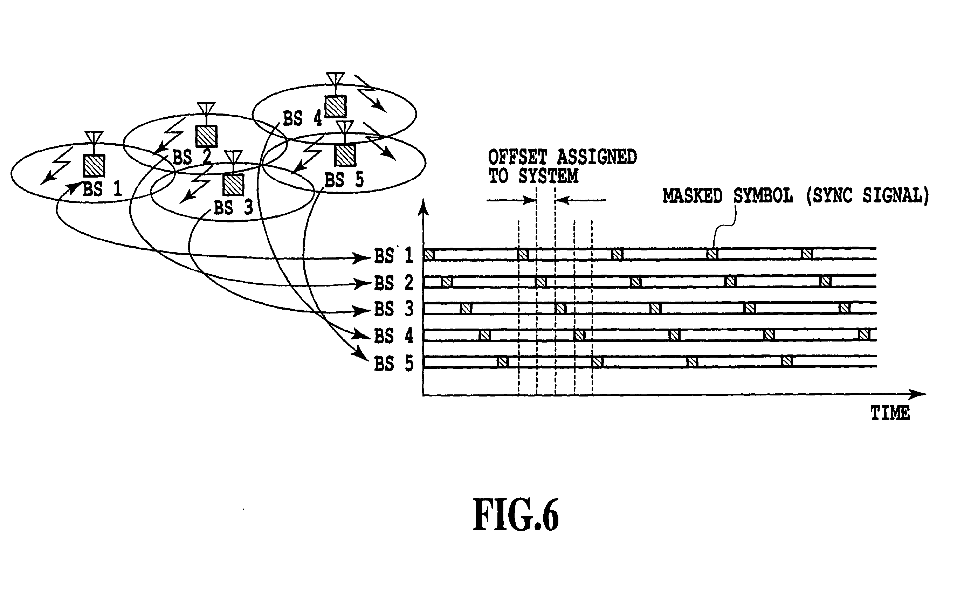

Fig. 6 is a schematic diagram illustrating an operation of the mobile communications system in accordance with the present invention;

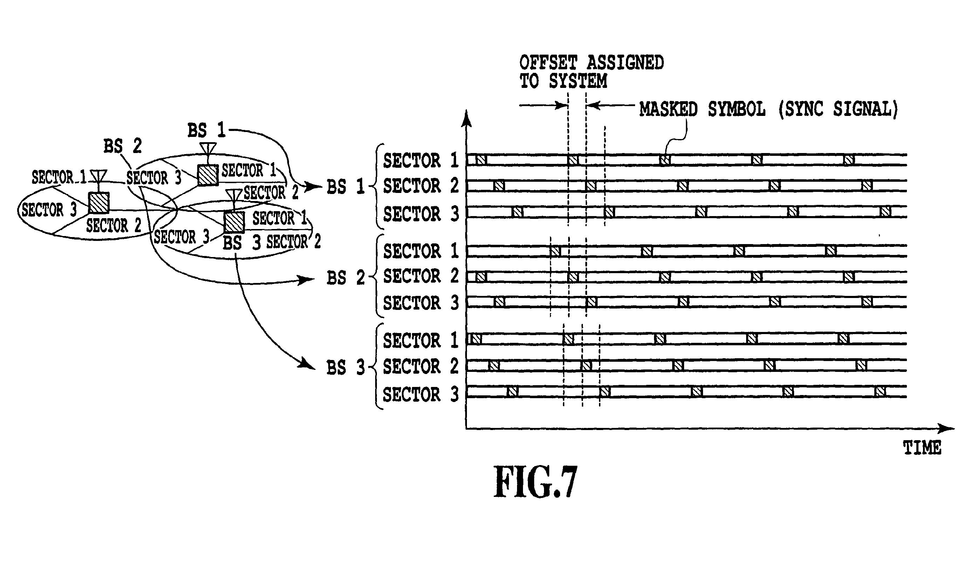

Fig. 7 is a schematic diagram illustrating another operation of the mobile communications system in accordance with the present invention; and

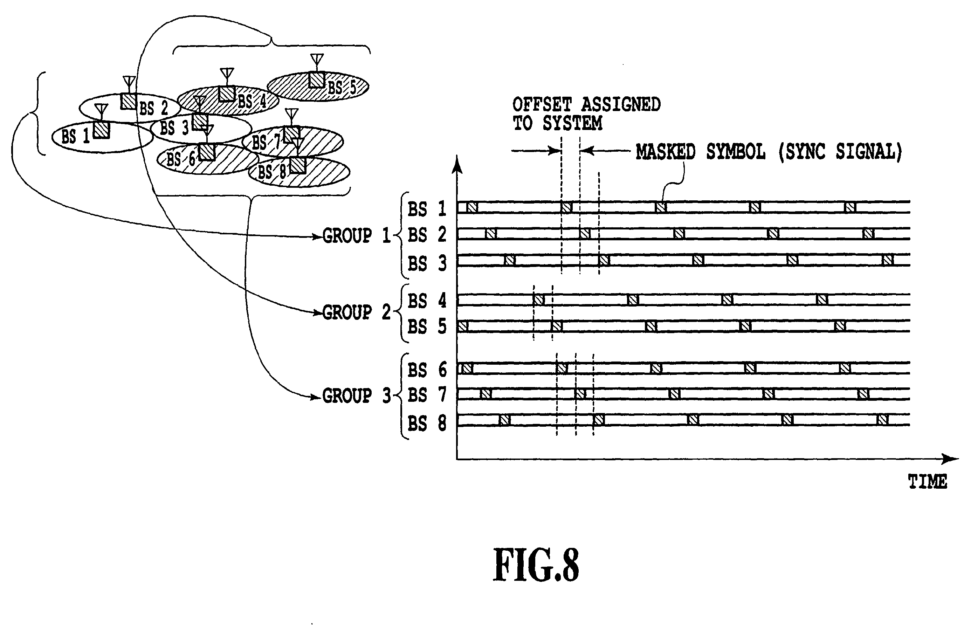

Fig. 8 is a schematic diagram illustrating still another operation of the mobile communications system in accordance with the present invention.

The invention will now be described with reference to the accompanying drawings.

### EMBODIMENT 1

Fig. 5 is a block diagram showing a configuration of a mobile communications system in accordance with the present invention, which shows only portions of the mobile communications system relevant to the present invention.

The mobile communications system 500 comprises at least a base station 10, a mobile station 20, and a timing manager 30.

The base station 10, which is connected to the timing manager 30 to receive timing information therefrom, carries out radio communications with the mobile station 20. The base station 10 comprises at least a long period spreading code generator 502, a short period spreading code generator 504, a long period spreading code group code generator 506, a first combiner 508, a second combiner 510, a spreader 512, a transmission timing regulator 514, and an antenna 516. The long period spreading code generator 502, which is connected to the first combiner 508, generates the long period spreading code that is uniquely assigned to the base station and has a repetition period longer than the period of an information symbol, to be used for the spreading in the mobile communications system. The short period spreading code generator 504, which is connected to both the first combiner 508 and second combiner 510, generates short period spreading codes that are common to all the base stations and have the same repetition period as the information symbol, to be used for the spreading in the mobile communications system. The long period spreading code group code generator 506, which is connected to the second combiner 510, generates a group code of the long period spreading code. The first combiner 508, which is connected to the long period spreading code generator 502, short period spreading code generator 504 and spreader 512, combines the spreading codes generated by the long period spreading code generator 502 and short period spreading code generator 504, and supplies its output to the spreader 512. The second combiner 510, which is connected to the short period spreading code generator 504, long period spreading code group code generator 506 and switch SW, combines the short period spreading code generated by the short period spreading code generator 504 with the long period spreading code group code generated by the long period spreading code group code generator 506, and supplies its output to the switch SW. The spreader 512, which is connected to the first combiner 508 and switch SW, spreads perch channel information using the spreading code combined by the first combiner 508, and supplies its output to the switch SW. The switch SW normally connects the spreader 512 to the transmission timing regulator 514, but the second combiner 510 to the transmission timing regulator 514 at timings of the masking symbol, that is, the sync signal transmitted at every fixed interval from the second combiner 510. The transmission timing regulator 514, which is connected to the switch SW, antenna 516 and timing manager 30 through a communication channel, receives the timing information from the timing manager 30, and regulates the transmission timing of the signal from the spreader 512 or second combiner 510 to be transmitted to the mobile station 20 through the antenna 516. The antenna 516 connected to the transmission timing regulator 514 carries out radio communications with the mobile station 20. The timing manager 30 is connected to a plurality of base stations 10 to transfer the timing information to each base station. The mobile station 20 carries out the radio communications with the base station.

Next, an operation of the present embodiment of the mobile communications system 500 with the foregoing configuration will be described in detail with reference to Figs. 6-8.

Fig. 6 is a schematic diagram illustrating an operation of the mobile communications system in accordance with the present invention.

In Fig. 6, base stations BS1-BS5 each transmit a sync signal (masking symbol) regularly which is not spread by the long period spreading code. The base stations BS1-BS5 transmit these sync signals with shifted timing relationship among one another as depicted at bottom right of Fig. 6. The amount of shifting is fixed to the predetermined interval of the system and is known to the mobile stations in advance. Accordingly, the mobile station can acquire a plurality of sync signals efficiently in the neighboring cell search or in the base station selection by searching for sync signals from other base stations, focusing on the timings shifted by the fixed intervals from the timing of the sync signal reception, which is sent from the base station that has already been acquired by the mobile station.

Fig. 7 is a schematic diagram illustrating another operation of the mobile communications system in accordance with the present invention.

Cells including base stations BS1-BS3 are each divided into three sectors 1-3, each of which transmits a sync signal. The sync signals are transmitted with a fixed amount of timing offset, as illustrated on the right-hand side of Fig. 7. As illustrated in Fig. 7, the transmission timings of the sync signals are each shifted by the fixed interval between the sectors under the same base station so that the sync signals are sent with an offset assigned to the system.

Fig. 8 is a schematic diagram illustrating still another operation of the mobile communications system in accordance with the present invention.

In Fig. 8, the long period spreading codes used by the base stations are divided into groups such that the base stations BS1-BS3 use the long period spreading codes belonging to group 1, BS4 and BS5 use those belonging to group 2 and BS6-BS8 those belonging to group 3. The transmission timings of the sync signals sent from the base stations in the same group are each shifted by a fixed interval as illustrated in the bottom right of Fig. 8.

Incidentally, to apply the present invention to a plurality of base stations at different locations, it is necessary to install an external timing source to align timing axes among the base stations. To achieve this, the foregoing embodiment employs the timing manager 30. The present invention, however, is not limited to it. For example, it can use the GPS or a wired network as the timing source, offering a similar effect.

According to the present invention as described above, since the base stations each shift their sync signal transmission timings by the predetermined time periods, the mobile station can narrow the receiving timings of the sync signals, offering an advantage of being able to reduce the load on the mobile station involved in the neighboring cell search or the base station selection. Since the mobile station knows in advance that it can receive the sync signals from the base stations at the timings shifted by the predetermined fixed intervals, it can carry out the neighboring cell search focusing on the desired timing of the sync signal from the intended base station, thereby improving the efficiency of the neighboring cell search.

Furthermore, in the mobile communications system according to the present invention which divides the long period spreading codes into groups in advance, the base stations using the long period spreading codes in the same group each transmit their sync signals shifting the transmission timings by the predetermined interval. This enables the mobile station to limit the group of the long period spreading codes and the receiving timing of the sync signal, thereby reducing the load on the mobile station in the neighboring cell search or base station selection.

## Claims

1. A sync signal transmission method in a CDMA mobile communications system including at least a plurality of base stations (BS1-BS5) and a mobile station (20), said sync signal transmission method comprising the steps of:
carrying out double spreading of information symbols using a short period spreading code and a long period spreading code, wherein the short period spreading code has a repetition period identical to a period of the information symbols and is assigned in common to all the base stations (BS1-BS5), and the long period spreading code has a repetition period longer than the information symbols and is differently assigned to each of said base stations (BS1-BS5);
transmitting the doubly spread information symbols to said mobile station (20);
**characterized by** the steps of:
receiving timing information at the plurality of base stations (BS1-BS5) to align timing axes among the base stations; and
intermittently transmitting a sync signal, which is spread only by the short period spreading code, from said plurality of base stations to said mobile station (20) with transmission timings shifted among one another by an amount that is fixed to a predetermined interval of the system and is known to the mobile station in advance.

2. The sync signal transmission method as claimed in claim 1, wherein:
said step of carrying out double spreading carries out double spreading of information symbols using a short period spreading code and a long period spreading code, wherein the short period spreading code has a repetition period identical to a period of the information symbols and is assigned in common to all the base stations, and the long period spreading code has a repetition period longer than the information symbols, is differently assigned to each of said base stations (BS1-BS5), and belongs to one of groups into which a plurality of long period spreading codes are divided; and
said step of intermittently transmitting intermittently transmits a sync signal, which is spread by only the short period spreading code, from said plurality of base stations (BS1-BS5) to said mobile station (20) with transmission timings shifted by a fixed interval for each of base stations using the long period spreading codes belonging to the same group.

3. The sync signal transmission method as claimed in claim 1, wherein at least an interval between a transmission timing of said sync signal in a first base station (BS1) and a transmission timing of said sync signal in a second base station (BS2) is the same as an interval between the transmission timing of said sync signal in the second base station (BS2) and a transmission timing of said sync signal in a third base station (BS3).

4. A CDMA mobile communications system including at least a plurality of base stations (BS1-BS5) and a mobile station (20), said CDMA mobile communications system comprising:
means for carrying out double spreading of information symbols (502, 504, 506, 508, 510, 512) using a short period spreading code and a long period spreading code, wherein the short period spreading code has a repetition period identical to a period of the information symbols and is assigned in common to all the base stations (BS1-BS5), and the long period spreading code has a repetition period longer than the information symbols and is differently assigned to each of said base stations (BS1-BS5);
means for transmitting (516) the doubly spread information symbols to said mobile station;
**characterized by**:
means for receiving timing information at the plurality of base stations to align timing axes among the base stations; and
means (30, 514) for intermittently transmitting a sync signal, which is spread only by the short period spreading code, from said plurality of base stations (BS1-BS5) to said mobile station (20) with transmission timings shifted among one another by an amount that is fixed to a predetermined interval of the system and is known to the mobile station in advance.

5. The CDMA mobile communications system as claimed in claim 4, wherein:
said means for carrying out double spreading (502-512) carries out double spreading of information symbols using a short period spreading code and a long period spreading code, wherein the short period spreading code has a repetition period identical to a period of the information symbols and is assigned in common to all the base stations (BS1-BS5), and the long period spreading code has a repetition period longer than the information symbols, is differently assigned to each of said base stations (BS1-BS5), and belongs to one of groups into which a plurality of long period spreading codes are divided; and
said means (30, 514) for intermittently transmitting a sync signal intermittently transmits a sync signal, which is spread by only the short period spreading code, from said plurality of base stations to said mobile station with transmission timings shifted by a fixed interval for each of base stations (BS1-BS5) using the long period spreading codes belonging to the same group.

6. The CDMA mobile communications system as claimed in claim 4, wherein at least an interval between a transmission timing of said sync signal in a first base station (BS1) and a transmission timing of said sync signal in a second base station (BS2) is the same as an interval between the transmission timing of said sync signal in the second base station and a transmission timing of said sync signal in a third base station (BS3).

7. A base station in a CDMA mobile communications system for communicating with a mobile station (20), said base station comprising:
means (502-512) for carrying out double spreading of information symbols using a short period spreading code and a long period spreading code, wherein the short period spreading code has a repetition period identical to a period of the information symbols and is assigned in common to all base stations, and the long period spreading code has a repetition period longer than the information symbols and is differently assigned to each of said base stations;
means for transmitting (514, 516) the doubly spread information symbols to said mobile station (20);
**characterized by**:
means for receiving (514) timing information suitable for aligning timing axes among a plurality of base stations (BS1-BS5); and
means for intermittently transmitting a sync signal (510, 516), which is spread only by the short period spreading code, from said base station to said mobile station (20) with transmission timings shifted among one another by an amount that is fixed to a predetermined interval of the system and is known to the mobile station in advance.

8. The base station as claimed in claim 7, wherein:
said means for carrying out double spreading carries out double spreading of information symbols using a short period spreading code and a long period spreading code, wherein the short period spreading code has a repetition period identical to a period of the information symbols and is assigned in common to all the base stations, and the long period spreading code has a repetition period longer than the information symbols, is differently assigned to each of said base stations (BS1-BS5), and belongs to one of groups into which a plurality of long period spreading codes are divided; and
said means for intermittently transmitting a sync signal intermittently transmits a sync signal, which is spread by only the short period spreading code, from said base station to said mobile station with transmission timings shifted by a fixed interval for each of base stations using the long period spreading codes belonging to the same group.

9. The base station as claimed in claim 7, wherein at least an interval between a transmission timing of said sync signal in a first base station and a transmission timing of said sync signal in a second base station is the same as an interval between the transmission timing of said sync signal in the second base station and a transmission timing of said sync signal in a third base station.

10. A mobile station in a CDMA mobile communications system for receiving information symbols which are transmitted by a base station (BS1-BS5) and are doubly spread by using a short period spreading code and a long period spreading code, and a sync signal which is transmitted by a base station and is spread only by the short period spreading code, the short period spreading code having a repetition period identical to a period of the information symbols and being assigned in common to all base stations, said mobile station
**characterized by** comprising:
means for searching for a second sync signal focusing on a timing shifted by an amount from a reception timing of a first sync signal which has already been captured by the mobile station, the amount being fixed to a predetermined interval of the system and known to the mobile station in advance; and
means for capturing the second sync signal.

## Patentansprüche

1. Sync-Signal-Übertragungsverfahren in einem CDMA-Mobilkommunikationssystem mit zumindest mehreren Basisstationen (BS1-BS5) und einer Mobilstation (20), wobei das Sync-Signal-Übertragungsverfahren die folgenden Schritte umfasst:
Ausführen von doppelter Spreizung von Informationssymbolen mittels eines Spreizcodes von kurzer Dauer und eines Spreizcodes von langer Dauer, wobei der Spreizcode von kurzer Dauer einer der Dauer der Informationssymbole gleiche Wiederholungsdauer aufweist und gemeinsam allen Basisstationen (BS1-BS5) zugeschrieben ist, und der Spreizcode langer Dauer eine Wiederholungsdauer aufweist, die länger als die Informationssymbole ist, und jeder Basisstation (BS1-BS5) verschieden zugeschrieben ist;
Übertragen der doppelt gespreizten Informationssymbole an die Mobilstation (20);
**gekennzeichnet durch** die folgenden Schritte:
Empfangen von Zeitinformationen an den mehreren Basisstationen (BS1-BS5), um Zeitachsen unter den Basisstationen aneinander auszurichten; und
unterbrochenes Übertragen eines Sync-Signals, das nur vom Spreizcode kurzer Dauer gespreizt ist, von den mehreren Basisstationen an die Mobilstation (20) zu Übertragungszeitpunkten, die voneinander um ein Maß verschoben sind, das auf ein vorgegebenes Intervall des Systems festgelegt und der Mobilstation im Voraus bekannt ist.

2. Sync-Signal-Übertragungsverfahren nach Anspruch 1, wobei:
bei der Ausführung der doppelten Spreizung Informationssymbole mittels eines Spreizcodes kurzer Dauer und eines Spreizcodes langer Dauer doppelt gespreizt werden, wobei der Spreizcode kurzer Dauer eine Wiederholungsdauer aufweist, die einer Dauer der Informationssymbole gleicht, und gemeinsam allen Basisstationen zugeschrieben ist, und der Spreizcode langer Dauer eine Wiederholungsdauer aufweist, die länger als die Informationssymbole ist, jeder Basisstation (BS1-BS5) verschieden zugeschrieben ist und zu einer von den Gruppen gehört, in die mehrere Spreizcodes langer Dauer aufgeteilt sind; und
beim unterbrochenen Übertragen ein Sync-Signal, das nur mittels des Spreizcodes kurzer Dauer gespreizt ist, von den mehreren Basisstationen (BS1-BS5) an die Mobilstation (20) zu Übertragungszeitpunkten unterbrochen übertragen wird, die um ein festes Intervall für jede der Basisstationen verschoben sind, die die zur gleichen Gruppe gehörenden Spreizcodes langer Dauer verwenden.

3. Sync-Signal-Übertragungsverfahren nach Anspruch 1, wobei zumindest ein Übertragungsintervall zwischen einem Übertragungszeitpunkt des Sync-Signals in einer ersten Basisstation (BS1) und einem Übertragungszeitpunkt des Sync-Signals in einer zweiten Basisstation (BS2) gleich einem Intervall zwischen dem Übertragungszeitpunkt des Sync-Signals in der zweiten Basisstation (BS2) und einem Übertragungszeitpunkt des Sync-Signals in einer dritten Basisstation (BS3).

4. CDMA-Mobilkommunikationssystem, das zumindest mehrere Basisstationen (BS1-BS5) und eine Mobilstation (20) enthält, wobei das CDMA-Mobilkommunikationssystem umfasst:
eine Einrichtung zum Ausführen von doppeltem Spreizen von Informationssymbolen (502, 504, 506, 508, 510, 512) mittels eines Spreizcodes kurzer Dauer und eines Spreizcodes langer Dauer, wobei der Spreizcode kurzer Dauer eine Wiederholungsdauer aufweist, die einer Dauer der Informationssymbole gleicht, und gemeinsam allen Basisstationen (BS1-BS5) zugeschrieben ist, und der Spreizcode langer Dauer eine Wiederholungsdauer aufweist, die länger als die Informationssymbole ist, und jeder Basisstation (BS1-BS5) verschieden zugeschrieben ist;
eine Einrichtung zum Übertragung (516) der doppelt gespreizten Informationssymbole an die Mobilstation;
**gekennzeichnet durch**:
eine Einrichtung zum Empfangen von Zeitinformationen an den mehreren Basisstationen, um Zeitachsen unter den Basisstationen aneinander auszurichten; und
eine Einrichtung (30, 514) zum unterbrochenen Übertragen eines Sync-Signals, das nur mittels des Spreizcodes kurzer Dauer gespreizt ist, von den mehreren Basisstationen (BS1-BS5) an die Mobilstation (20) zu Übertragungszeitpunkten, die voneinander um ein Maß verschoben sind, das auf ein vorgegebenes Intervall des Systems festgelegt ist und der Mobilstation im Voraus bekannt ist.

5. CDMA-Mobilkommunikationssystem nach Anspruch 4, wobei:
die Einrichtung zum Ausführen von doppeltem Spreizen (502-512) das doppelte Spreizen von Informationssymbolen unter Verwendung eines Spreizcodes kurzer Dauer und eines Spreizcodes langer Dauer ausführt, wobei der Spreizcode kurzer Dauer eine Wiederholungsdauer aufweist, die einer Dauer der Informationssymbole gleicht, und gemeinsam allen Basisstationen (BS1-BS5) zugeschrieben ist, und der Spreizcode langer Dauer eine Wiederholungsdauer aufweist, die länger als die Informationssymbole ist, jeder der Basisstationen (BS1-BS5) verschieden zugeschrieben ist und zu einer von den Gruppen gehört, in die mehrere Spreizcodes langer Dauer aufgeteilt sind; und
die Einrichtung (30, 514) zum unterbrochenen Übertragen eines Sync-Signals ein Sync-Signal, das nur mittels des Spreizcodes kurzer Dauer gespreizt ist, von den mehreren Basisstationen an die Mobilstation zu Übertragungszeitpunkten unterbrochen überträgt, die um ein festes Intervall für jede der Basisstationen (BS1-BS5) verschoben ist, die die zur gleichen Gruppe gehörenden Spreizcodes langer Dauer verwenden.

6. CDMA-Mobilkommunikationssystem nach Anspruch 4, wobei zumindest ein Intervall zwischen einem Übertragungszeitpunkt des Sync-Signals in einer ersten Basisstation (BS1) und einem Übertragungszeitpunkt des Sync-Signals in einer zweiten Basisstation (BS2) gleich einem Intervall zwischen dem Übertragungszeitpunkt des Sync-Signals in der zweiten Basisstation (BS2) und einem Übertragungszeitpunkt des Sync-Signals in einer dritten Basisstation (BS3) ist.

7. Basisstation in einem CDMA-Mobilkommunikationssystem zur Kommunikation mit einer Mobilstation (20), wobei die Basisstation umfasst:
eine Einrichtung (502-512) zum Ausführen von doppeltem Spreizen von Informationssymbolen unter Verwendung eines Spreizcodes kurzer Dauer und eines Spreizcodes langer Dauer, wobei der Spreizcode kurzer Dauer eine Wiederholungsdauer aufweist, die einer Dauer der Informationssymbole gleicht, und gemeinsam allen Basisstationen zugeschrieben ist, und der Spreizcode langer Dauer eine Wiederholungsdauer aufweist, die länger als die Informationssymbole ist, und jeder der Basisstationen verschieden zugeschrieben ist;
eine Einrichtung zum Übertragen (514, 516) der doppelt gespreizten Informationssymbole an die Mobilstation (20);
**gekennzeichnet durch**:
eine Einrichtung zum Empfangen (514) von Zeitinformationen, die dazu geeignet sind, Zeitachsen unter mehreren Basisstationen (BS1-BS5) aneinander auszurichten; und
eine Einrichtung zum unterbrochenen Übertragen eines Sync-Signals (510, 516), das nur mittels des Spreizcodes kurzer Dauer gespreizt wird, von der Basisstation an die Mobilstation (20) zu Übertragungszeitpunkten, die voneinander um ein Maß verschoben sind, das auf ein vorgegebenes Intervall des Systems festgelegt ist und der Mobilstation im Voraus bekannt ist.

8. Basisstation nach Anspruch 7, wobei:
die Einrichtung zum Ausführen von doppeltem Spreizen das doppelte Spreizen von Informationssymbolen unter Verwendung eines Spreizcodes kurzer Dauer und eines Spreizcodes langer Dauer ausführt, wobei der Spreizcode kurzer Dauer eine Wiederholungsdauer aufweist, die einer Dauer der Informationssymbole gleicht, und gemeinsam allen Basisstationen zugeschrieben ist, und der Spreizcode langer Dauer eine Wiederholungsdauer aufweist, die länger als die Informationssymbole ist, jeder der Basisstationen (BS1-BS5) verschieden zugeschrieben ist und zu einer der Gruppen gehört, in die mehrere Spreizcodes langer Dauer aufgeteilt sind; und
die Einrichtung zum unterbrochenen Übertragen eines Sync-Signals ein Sync-Signal, das nur mittels des Spreizcodes kurzer Dauer gespreizt ist, von der Basisstation an die Mobilstation zu Übertragungszeitpunkten unterbrochen überträgt, die um ein festes Intervall für jede der Basisstationen verschoben sind, die zur gleichen Gruppe gehörende Spreizcodes langer Dauer verwenden.

9. Basisstation nach Anspruch 7, wobei zumindest ein Intervall zwischen einem Übertragungszeitpunkt des Sync-Signals in einer ersten Basisstation und einem Übertragungszeitpunkt des Sync-Signals in einer zweiten Basisstation gleich einem Intervall zwischen dem Übertragungszeitpunkt des Sync-Signals in der zweiten Basisstation und einem Übertragungszeitpunkt des Sync-Signals in einer dritten Basisstation ist.

10. Mobilstation in einem CDMA-Mobilkommunikationssystem zum Empfangen von Informationssymbolen, die von einer Basisstation (BS1-BS5) übertragen werden und mittels eines Spreizcodes kurzer Dauer und eines Spreizcodes langer Dauer gespreizt sind, sowie von einem Sync-Signal, das von einer Basisstation übertragen wird und nur mittels des Spreizcodes kurzer Dauer gespreizt ist, wobei der Spreizcode kurzer Dauer eine Wiederholungsdauer aufweist, die einer Dauer der Informationssymbole gleicht, und gemeinsam allen Basisstationen zugeschrieben ist, wobei die Mobilstation **dadurch gekennzeichnet ist, dass** sie umfasst:
eine Einrichtung zum Suchen nach einem zweiten Sync-Signal unter Berücksichtigung eines Zeitpunkts, der von einem Empfangszeitpunkt eines ersten Sync-Signals, das bereits von der Mobilstation erfasst worden ist, um ein Maß verschoben ist, das auf ein vorgegebenes Intervall des Systems festgelegt ist und der Mobilstation im Voraus bekannt ist; und
eine Einrichtung zum Erfassen des zweiten Sync-Signals.

## Revendications

1. Procédé de transmission de signal de synchronisation dans un système de communications mobiles de type AMRC comprenant au moins de multiples stations de base (BS1-BS5) et une station mobile (20), ledit procédé de transmission de signal de synchronisation comprenant les étapes qui consistent :
à exécuter un double étalement de symboles d'information en utilisant un code d'étalement de période courte et un code d'étalement de période longue, le code d'étalement de période courte ayant une période de répétition identique à une période des symboles d'information et étant affecté en commun à toutes les stations de base (BS1-BS5), et le code d'étalement de période longue ayant une période de répétition plus longue que les symboles d'information et étant affecté différemment à chacune desdites stations de base (BS1-BS5) ;
à transmettre les symboles d'information étalés de façon double à ladite station mobile (20) ;
**caractérisé par** les étapes qui consistent :
à recevoir une information de positionnement temporel aux multiples stations de base (BS1-BS5) pour aligner des axes de positionnement temporel entre les stations de base; et
à transmettre par intermittence un signal de synchronisation, qui est étalé uniquement par le code d'étalement de période courte, desdites multiples stations de base à ladite station mobile (20) avec des positionnements temporels de transmission décalés les uns par rapport aux autres d'une grandeur qui est fixée à un intervalle prédéterminé du système et est connue à l'avance de la station mobile.

2. Procédé de transmission de signal de synchronisation selon la revendication 1, dans lequel :
ladite étape d'exécution d'un étalement double effectue un étalement double de symboles d'information en utilisant un code d'étalement de période courte et un code d'étalement de période longue, le code d'étalement de période courte ayant une période de répétition identique à une période des symboles d'information et étant affecté en commun à toutes les stations de base, et le code d'étalement de période longue ayant une période de répétition plus longue que les symboles d'information, étant affecté différemment à chacune desdites stations de base (BSA-BS5) et appartenant à l'un des groupes dans lesquels de multiples codes d'étalement de périodes longues sont répartis ; et
ladite étape de transmission par intermittence transmet par intermittence un signal de synchronisation, qui est étalé uniquement par le code d'étalement de période courte, desdites multiples stations de base (BS1-BS5) à ladite station mobile (20) avec des positionnements temporels de transmission décalés d'un intervalle fixe pour chacune des stations de base en utilisant les codes d'étalement de période longue appartenant au même groupe.

3. Procédé de transmission de signal de synchronisation selon la revendication 1, dans lequel au moins un intervalle entre un positionnement temporel de transmission dudit signal de synchronisation dans une première station de base (BS1) et un positionnement temporel de transmission dudit signal de synchronisation dans une deuxième station de base (BS2) est identique à un intervalle entre le positionnement temporel de transmission dudit signal de synchronisation dans la deuxième station de base (BS2) et un positionnement temporel de transmission dudit signal de synchronisation dans une troisième station de base (BS3).

4. Système de communications mobiles du type AMRC comprenant au moins de multiples stations de base (BS1-BS5) et une station mobile (20), ledit système de communications mobiles AMRC comportant :
un moyen destiné à effectuer un double étalement de symboles d'information (502, 504, 506, 508, 510, 512) en utilisant un code d'étalement de période courte et un code d'étalement de période longue, le code d'étalement de période courte ayant une période de répétition identique à une période des symboles d'information et étant affecté en commun à toutes les stations de base (BS1-BS5), et le code d'étalement de période longue ayant une période de répétition plus longue que les symboles d'information et étant affecté différemment à chacune desdites stations de base (BS1-BS5) ;
un moyen destiné à transmettre (516) à ladite station mobile les symboles d'information doublement étalés ;
**caractérisé par** :
un moyen destiné à recevoir une information de positionnement temporel aux multiples stations de base afin d'aligner des axes de positionnement temporel entre les stations de base ; et
un moyen (30, 514) destiné à transmettre par intermittence un signal de synchronisation, qui est étalé uniquement par le code d'étalement de période courte, desdites multiples stations de base (BS1-BS5) à ladite station mobile (20) avec des positionnements temporels de transmission décalés les uns par rapport aux autres d'une grandeur qui est fixée à un intervalle prédéterminé du système et est connue à l'avance de la station mobile.

5. Système de communications mobiles du type AMRC selon la revendication 4, dans lequel :
ledit moyen destiné à exécuter un étalement double (502-512) effectue un étalement double des symboles d'information en utilisant un code d'étalement de période courte et un code d'étalement de période longue, le code d'étalement de période courte ayant une période de répétition identique à une période des symboles d'information et étant affecté en commun à toutes les stations de base (BS1-BS5), et le code d'étalement de période longue ayant une période de répétition plus longue que les symboles d'information, étant affecté différemment à chacune desdites stations de base (BS1-BS5), et appartenant à l'un des groupes dans lesquels de multiples codes d'étalement de période longue sont répartis ; et
ledit moyen (30, 514) destiné à transmettre par intermittence un signal de synchronisation transmet par intermittence un signal de synchronisation, qui est étalé uniquement par le code d'étalement de période courte, desdites multiples stations de base à ladite station mobile avec des positionnements temporels de transmission décalés d'un intervalle fixe pour chacune des stations de base (BS1-BS5) en utilisant les codes d'étalement de période longue appartenant au même groupe.

6. Système de communications mobiles du type AMRC selon la revendication 4, dans lequel au moins un intervalle entre un positionnement temporel de transmission dudit signal de synchronisation dans une première station de base (BS1) et un positionnement temporel de transmission dudit signal de synchronisation dans une deuxième station de base (BS2) est identique à un intervalle entre le positionnement temporel de transmission dudit signal de synchronisation dans la deuxième station de base et un positionnement temporel de transmission dudit signal de synchronisation dans une troisième station de base (BS3).

7. Station de base dans un système de communications mobiles de type AMRC pour une communication avec une station mobile (20), ladite station de base comportant :
un moyen (502-512) destiné à effectuer un étalement double de symboles d'information en utilisant un code d'étalement de période courte et un code d'étalement de période longue, le code d'étalement de période courte ayant une période de répétition identique à une période des symboles d'information et étant affecté en commun à toutes les stations de base, et le code d'étalement de période longue ayant une période de répétition plus longue que les symboles d'information, étant affecté différemment à chacune desdites stations de base ;
un moyen destiné à transmettre (514, 516) à ladite station mobile (20) les symboles d'information doublement étalés ;
**caractérisée par** :
un moyen destiné à recevoir (514) une information de positionnement temporel appropriée pour aligner les axes de positionnement temporel entre de multiples stations de base (BS1-BS5) ; et
un moyen destiné à transmettre par intermittence un signal de synchronisation (510, 516), qui est étalé uniquement par le code d'étalement de période courte, de ladite station de base à ladite station mobile (20) avec des positionnements temporels de transmission décalés les uns par rapport aux autres d'une grandeur qui est fixée à un intervalle prédéterminé du système et est connue à l'avance de la station mobile.

8. Station de base selon la revendication 7, dans laquelle :
ledit moyen destiné à exécuter un étalement double effectue un étalement double de symboles d'information en utilisant un code d'étalement de période courte et un code d'étalement de période longue, le code d'étalement de période courte ayant une période de répétition identique à une période des symboles d'information et étant affecté en commun à toutes les stations de base, et le code d'étalement de période longue ayant une période de répétition plus longue que les symboles d'information, étant affecté différemment à chacune desdites stations de base (BS1-BS5), et appartenant à l'un de groupes dans lesquels de multiples codes d'étalement de période longue sont répartis ; et
ledit moyen destiné à transmettre par intermittence un signal de synchronisation transmet par intermittence un signal de synchronisation, qui est étalé uniquement par le code d'étalement de période courte, de ladite station de base à ladite station mobile avec des positionnements temporels de transmission décalés d'un intervalle fixe pour chacune des stations de base utilisant les codes d'étalement de période longue appartenant au même groupe.

9. Station de base selon la revendication 7, dans laquelle au moins un intervalle entre un positionnement temporel de transmission dudit signal de synchronisation dans une première station de base et un positionnement temporel de transmission dudit signal de synchronisation dans une deuxième station de base est égal à un intervalle entre le positionnement temporel de transmission dudit signal de synchronisation dans la deuxième station de base et un positionnement temporel de transmission dudit signal de synchronisation dans une troisième station de base.

10. Station mobile dans un système de communications mobiles de type AMRC destinée à recevoir des symboles d'information qui sont transmis par une station de base (BS1-BS5) et qui sont doublement étalés par l'utilisation d'un code d'étalement de période courte et d'un code d'étalement de période longue, et un signal de synchronisation qui est transmis par une station de base et qui est étalé uniquement par le code d'étalement de période courte, le code d'étalement de période courte ayant une période de répétition identique à une période des symboles d'information et étant affecté en commun à toutes les stations de base, ladite station mobile étant **caractérisée en ce qu'**elle comporte :
un moyen destiné à rechercher un second signal de synchronisation focalisant sur un positionnement temporel décalé d'une grandeur par rapport à un positionnement temporel de réception d'un premier signal de synchronisation qui a déjà été capté par une station mobile, la grandeur étant fixée à un intervalle prédéterminé du système et étant connue à l'avance de la station mobile ; et
un moyen destiné à capter le second signal de synchronisation.
